# EUROPEAN PATENT SPECIFICATION

(11) **EP 1 883 674 B1**
(45) Date of publication and mention of the grant of the patent: **03.08.2011**
(21) Application number: 06758678.4
(22) Date of filing: 28.04.2006
(51) Int. Cl.: C08K 5/00, C08K 5/13, C08K 5/18

(54) **STABILIZER BLEND FOR IMPROVED CHLORINE RESISTANCE**
STABILISATORMISCHUNG FÜR VERBESSERTE CHLORBESTÄNDIGKEIT
MELANGE STABILISATEUR DESTINE A AMELIORER LA RESISTANCE AU CHLORE

(30) Priority: 19.05.2005 US 133911
(43) Date of publication of application: 06.02.2008
(73) Proprietor: CHEMTURA CORPORATION, Middlebury, CT 06749 (US)
(72) Inventor: GELBIN, Michael, E., Middlebury, CT 06762 (US)
(74) Representative: Schön, Christoph
(86) International application number: PCT/US2006/016072
(87) International publication number: WO 2006/124226

(56) References cited:
- EP-A- 0 271 235
- EP-A- 0 309 285
- EP-A- 0 310 393
- WO-A-96/08532
- WO-A-03/064511
- US-B1- 6 569 927

## Description

### 1. Field of the Invention

The present invention relates to a method for increasing the stability of a high density polyethylene resin. More particularly, the present invention relates to a method for increasing the stability of a high density polyethylene resin that affords improved resistance to degradation caused by chlorinated water.

### 2. Description of Related Art

It is known in the art that hot water pipe made from plastic materials is subject to premature mechanical failure owing to stress related crack growth. The visible result of this failure is a water leak in the pipe caused by formation of cracks or pinholes. It is further known that premature failure of the plastics may result from an extraction of the antioxidants/stabilizers present in the plastic material by hot water. It is also generally known that once the antioxidants are depleted by extraction, the plastic is no longer protected, and will consequently suffer mechanical failure from thermo-oxidative degradation.

In the United States, chlorine is added to potable water to disinfect it. The presence of chlorine, however, has given rise to concerns over the stability of plastic pipe that transports the water. In fact, that concern has led to standard test methods that measure the resistance of plastic water pipe to chlorine.

Several years ago a plastic pipe plumbing system made of polybutene-1 was marketed in the United States. This system used polyacetal fittings to join the pipes. Rather soon after its introduction, this system became plagued by reports from the field about premature failure. What happened was that the polyacetal fittings were prone to develop water leaks. Against the background of multiple litigations, manufacturers and distributors of the pipe system began an investigation into the cause of the mechanical failure of the polyacetal fittings. It was generally concluded that the polyacetal could not stand up to the deleterious effect of chlorine. (See Broutman, L. J. et al., ANTEC 1999, 3366, and Lewis, P. R., ANTEC 2000, 3125).

Recent interest in plastic water pipes has focused on high and medium density polyethylene. In its cross-linked variation, a typical end use is in hot water applications. Regular polyethylene water pipe is used as water distribution pipe, and in drainage and sewer applications. Polyethylene-based water pipe may sometimes contain carbon black.

In the context of experience with polybutene-1 plumbing systems, concern has arisen over the resistance of polyethylene to chlorinated water. In fact, the ASTM has released a relevant standard test method for both polyethylene and cross-linked polyethylene to address the issue (ASTM Standard Test Methods F 2263 and F 2023).

It is generally known that hot water by itself can deplete any stabilizers present in polyethylene pipes (See Kramer, E. et al., Kunststoffe 73:11 (1983), which describes an investigation of the aging characteristics of hot water pipe made from polybutene-1 and crosslinked polyethylene; Juskeviciute, S. et al., Mater. Vses. Simp. Vopr. Proizvod. Primen. Trub. Detalei Truboprovodov Polietilena (1966) 134, which describes the water extraction of antioxidants from high-pressure polyethylene films; and Pfahler, G. et al., Kunststoffe 78:142 (1988), which pertains to the extraction profile of several phenolic antioxidants from polypropylene and high density polyethylene formulations).

It is likewise documented that the presence of chlorine in water may accelerate the plastics failure process (See Hassinen, J. et al., Polym. Degrad & Stab. 84:261 (2004); Gill, T.S. et al., Proceedings of the Plastic Pipes X Conference, Gothenburg, 1998; Tanaka, A. et al., Proceedings of the Plastic Pipes X Conference, Gothenburg; 1998; Ifwarson, M. et al., Proceedings of the Plastic Pipes X Conference, Gothenburg; 1998; and Dear, J.P. et al., Polymers & Polymer Composites 9:1 (2001)).

U. S. Patent No. 6,541,547 discloses polyolefin mouldings that are stable on permanent contact with extracting media that comprise, as stabilizers, a selected mixture comprising an organic phosphite or phosphonite and a specially selected group of sterically hindered phenols or a certain group of sterically hindered amines. In addition, a selected three-component mixture comprising a phosphite or phosphonite, a phenolic antioxidant and a certain group of sterically hindered amines is said to be particularly suitable as stabilizer for polyolefin moldings which are in permanent contact with extracting media.

EP 0 310 393 A2 discloses an olefin polymer composition having improved resistance to deterioration in the presence of chlorinated and nonchlorinated water and having improved resistance to temperatures of 0 °C to 100 °C, said composition comprising a blend of: (a) 93 to 99.5 percent by weight of an isotactic polymer of an alpha olefin of 2 to 6 carbon atoms; (b) 0.05 to 0.50 percent by weight of a hindered amine UV stabilizer; (c) 0.05 to 1.1 by weight of a hindered phenolic thermal stabilizer having a molecular weight above 530; (d) 0 to 0.5 percent by weight of a nucleating agent; (e) 0 to 4 percent by weight of a pigment; (f) 0 to 3.0 percent by weight of a filler; and (g) >0 to 3.0 percent by weight of a chelating agent.

US 6 569 927 B1 discloses a composition comprising: (A) a thermoplastic resin; and (B) a stabilizing amount of a blend of at least one sterically hindered phenol antioxidant, at least one aromatic amine and/or N,N'-substituted oxamide antioxidant, and at least one lactone antioxidant having a 3-phenylbenzofuran-2-one structure. It discloses also a method for stabilizing a thermoplastic resin, wherein the method comprises adding thereto a stabilizing amount of a blend of at least one sterically hindered phenol antioxidant, at least one aromatic amine and/or N,N'-substituted oxamide antioxidant, and at least one lactone antioxidant having a 3-phenylbenzofuran-2-one structure. WO 96/08532 A discloses a method for stabilizing a polyethylene composition, such as a linear low density polyethylene, against degradation, by incorporating into the polyethylene composition, an effective stabilizing amount of a stabilizing composition of: (a) a pentaerythritol diphosphite; and (b) an antioxidant compound selected from the group consisting of: (i) at least one diphenylamine selected from the group consisting of alkyl-substituted diphenylamine and aralkyl-substituted diphenylamine; (ii) at least one sterically hindered phenol; and (iii) a combination of (i) and (ii).

EP 0 309 285 A2 discloses polypropylene or peroxide-free polyolefins which are stabilized against oxidative degradation by the presence therein of a stabilizing amount of an antioxidant composition which comprises: a) at least one diarylamine selected from the group consisting of alkyl-substituted diarylamine and aralkyl-substituted diarylamine and; b) at least one sterically hindered phenol.

EP 0 271 235 A2 discloses a polyolefin which is stabilized against oxidative degradation by the presence therein of a stabilizing amount of an antioxidant composition which comprises: a) at least one aralkyl-substituted diarylamine; and, b) at least one sterically hindered phenol.

### SUMMARY OF THE INVENTION

There is a continuing demand to improve the resistance of plastic water pipe to the deleterious effect of chlorine on the plastic material of which the pipe is made. The present invention relates to a method for increasing the stability of a high density polyethylene resin that affords improved resistance to degradation caused by chlorinated water.

More particularly, the present invention is directed to a method for increasing the stability of a high density polyethylene resin in the presence of water comprising adding to said resin a stabilizing amount of a blend of:
(A) 4,4'-bis(α,α-dimethylbenzyl)diphenylamine; and
(B) at least one sterically hindered phenol antioxidant, selected from the group consisting of 2,4-dimethyl-6-octyl-phenol; 2,6-di-t-butyl-4-methyl phenol; 2,6-di-t-butyl-4-ethyl phenol; 2,6-di-t-butyl-4-n-butyl phenol; 2,2'-methylenebis(4-methyl-6-t-butyl phenol); 2,2'-methylenebis(4-ethyl-6-t-butyl-phenol); 2,4-dimethyl-6-t-butyl phenol; 4-hydroxymethyl-2,6-di-t-butyl phenol; n-octadecyl-beta(3,5-di-t-butyl-4-hydroxyphenyl)propionate; 2,6-dioctadecyl-4-methyl phenol; 2,4,6-trimethyl phenol; 2,4,6-triisopropyl phenol; 2,4,6-tri-t-butyl phenol; 2-t-butyl-4,6-dimethyl phenol; 2,6-methyl-4-didodecyl phenol; tris(3,5-di-t-butyl-4-hydroxy isocyanurate; tris(2-methyl-4-hydroxy-5-t-butylphenyl)butane; 3,5-di-t-butyl-4-hydroxy hydrocinnamate; octadecyl-3,5-di-t-butyl-4-hydroxy hydrocinnamate; tetrakis{methylene(3,5-di-t-butyl-4-hydroxyhydrocinnamate)}methane; 1,2-bis(3,5-di-t-butyl-4-hydroxyhydrocinnamoyl)hydrazine; 1,3,5-tris(3,5-di-t-butyl-4-hydroxybenzyl)-s-triazine-2,4,6-(1H,3H,5H)trione; 2,2'-oxamido bis-{ethy)-3-(3,5-di-t-butyl-4-hydroxyphenyl)}propionate; 1,3,5-tris(4-t-butyl-3-hydroxy-2,6-dimethylbenzyl)-s-triazine-2,4,6-(1H,3H,5H)trione; 1,3,5-trimethyl-2,4,6-tris(3,5-di-t-butyl-4-hydroxybenzyl)benzene; 3,5-di-t-butyl-4-hydroxyhydrocinnamic acid trimester with 1,3,5-tris(2-hydroxyethyl)-5-triazine-2,4,6-(1H,3H,5H)-trione; bis(3,3-bis(4-hydroxy 3-t-butylphenyl)butanoic acid)glycolester; tetrakis{methylene (3,5-di-t-butyl-4-hydroxy-hydrocinnamate)}methane and 1,3,5-trimethyl-2,4,6-tris(3,5-di-t-butyl-4-hydroxybenzyl)benzene.

### DESCRIPTION OF THE PREFERRED EMBODIMENT(S)

As noted above, it is known in the art that the presence of a stabilizer blend comprising a phosphite stabilizer and a hindered phenol stabilizer can improve the resistance of a high density polyethylene resin, to an extracting medium, such as water, hot water and chlorinated water.

It has now been found that when a secondary aromatic amine antioxidant is substituted for the phosphite component, the resultant amine-phenolic blend affords superior protection to HDPE from the degrading effect of chlorine.

This improved resistance for the blend comprising an aromatic amine and a hindered phenol stabilizer was verified both in the absence and the presence of carbon black.

The aromatic amine antioxidant that is employed in the practice of the present invention is 4,4'-bis(α,α-dimethylbenzyl) diphenyl amine. Herein after, the aromatic amine antioxidant means said compound.

The useful hindered phenols include 2,4-dimethyl-6-octyl-phenol; 2,6-di-t-butyl-4-methyl phenol (i.e., butylated hydroxy toluene); 2,6-di-t-butyl-4-ethyl phenol; 2,6-dit-butyl-4-n-butyl phenol; 2,2'-methylenebis(4-methyl-6-t-butyl phenol); 2,2'-methylenebis(4-ethyl-6-t-butyl-phenol); 2,4-dimethyl-6-t-butyl phenol; 4-hydroxymethyl-2,6-di-t-butyl phenol; n-octadecyl-beta(3,5-di-t-butyl-4-hydroxyphenyl)propionate; 2,6-dioctadecyl-4-methyl phenol; 2,4,6-trimethyl phenol; 2,4,6-triisopropyl phenol; 2,4,6-tri-t-butyl phenol; 2-t-butyl-4,6-dimethyl phenol; 2,6-methyl-4-didodecyl phenol; tris(3,5-di-t-butyl-4-hydroxy isocyanurate, tris(2-methyl-4-hydroxy-5-t-butylphenyl)butane, 3,5-di-t-butyl-4-hydroxy hydrocinnamate; octadecyl-3,5-di-t-butyl-4-hydroxy hydrocinnamate (NAUGARD 76, Crompton Corp.; IRGANOX 1076, Ciba-Geigy); tetrakis{methylene(3,5-di-t-butyl-4-hydroxyhydrocinnamate)}methane (IRGANOX 1010, Ciba-Geigy); 1,2-bis(3,5-di-t-butyl-4-hydroxyhydrocinnamoyl)hydrazine (IRGANOX MD 1024,Ciba-Geigy); 1,3,5-tris(3,5-di-t-butyl-4-hydroxybenzyl)-s-triazine-2,4,6 (1H,3H,5H)trione (IRGANOX 3114,Ciba-Geigy); 2,2'-oxamido bis-{ethyl-3-(3,5-di-t-butyl-4-hydroxyphenyl)}propionate (NAUGARD XL-1, Crompton Corp.); 1,3,5-tris(4-t-butyl-3-hydroxy-2,6-dimethylbenzyl)-s-triazine-2,4,6-(1H,3H,5H)trione (CYANOX 1790, American Cyanamid Co.); 1,3,5-trimethyl-2,4,6-tris(3,5-di-t-butyl-4-hydroxybenzyl)benzene (ETHANOX 330, Ethyl Corp.); 3,5-di-t-butyl-4-hydroxyhydrocinnamic acid triester with 1,3,5-tris(2-hydroxyethyl)-5-triazine-2,4,6(1H,3H,5H)-trione, bis(3,3-bis(4-hydroxy-3-t-butylphenyl)butanoic acid)glycolester, tetrakis {methylene (3,5-di-t-butyl-4-hydroxy-hydrocinnamate)}methane (IRGANOX 1010, Ciba-Geigy) and 1,3,5-trimethyl-2,4,6-tris(3,5-di-t-butyl-4-hydroxybenzyl)benzene (ETHANOX 330, Ethyl Corp.).

Specifically, a blend comprising 4,4'-bis(α,α-dimethylbenzyl) diphenylamine and tetrakis [methylene (3,5-di-t-butyl-4-hydroxyhydrocinnamate)]methane provided performance superior to a control blend of tris(2,4-di-t-butylphenyl)phosphite and tetrakis [methylene (3,5-di-t-butyl-4-hydroxyhydrocinnamate)]methane.

A preferred composition is one comprising a blend of 4,4'-bis(α,α-dimethylbenzyl) diphenylamine and tetrakis [methylene (3,5-di-t-butyl-4-hydroxyhydrocinnamate)]methane.

It is preferred that the weight ratio of the two components be 1:1, although ratios in the range of 1:9 to 9:1 can be employed.

HDPE, i.e., high density polyethylene, is the thermoplastic resin stabilized by blends of the present invention.

A particulate filler may be included with the thermoplastic resins employed in the practice of the present invention, including siliceous fillers, carbon black, and the like. Such filler materials include, but are not limited to, metal oxides such as silica (pyrogenic and precipitated), titanium dioxide, aluminosilicate and alumina, clays and talc, carbon black, mixtures of the foregoing, and the like. Carbon black is preferred.

Thus, when a (natural) HDPE test coupon stabilized with a blend of the aromatic amine and a hindered phenol was immersed in hot chlorinated water, it gave better resistance to the deleterious effect of chlorine than a corresponding test coupon containing the phosphite based control. This performance advantage was recorded by Oxidation Induction Time.

Secondly, when a carbon black containing HDPE test coupon stabilized with a blend of the aromatic amine and a hindered phenol was immersed in hot chlorinated water, it too gave better resistance to the deleterious effect of chlorine than a corresponding carbon black containing test coupon containing the phosphite based control. This performance advantage, again, was recorded by Oxidation Induction Time.

Improved resistance for the blend comprising the aromatic amine and a hindered phenol stabilizer was further verified even in hot water alone, in the absence of chlorine.

Thus, when a HDPE test coupon stabilized with a blend of the aromatic amine and a hindered phenol was immersed in 60°C water, it provided a better stabilizing effect than a corresponding test coupon containing the phosphite based control, as measured by Oxidation Induction Time.

Next, when a carbon black containing HDPE test coupon stabilized with a blend of the aromatic amine and a hindered phenol was immersed in 60°C water, it afforded better stabilization than a corresponding carbon black containing test coupon containing the phosphite based control, as was recorded by Oxidation Induction Time.

The advantages and the important features of the present invention will be more apparent from the following examples.

### EXAMPLES

### Differential Scanning Calorimetry

Differential Scanning Calorimetry was performed using a Mettler 820 instrument equipped with Mettler Star software version 7.01. Test specimens containing no carbon black were evaluated in aluminum pans. Test specimens containing carbon black were analyzed in copper pans. Oxidation Induction Time (OIT) was measured by heating, under nitrogen, the appropriate pan containing a circular disk harvested from a test coupon to a temperature of 200°C. At that point, while holding a temperature of 200°C, an oxygen atmosphere was introduced. OIT was recorded as the time elapsed until the onset of the curve. Higher OIT numbers indicate better protection and/or less stabilizer depletion.

### Test Coupon Preparation and Aging Experiment

Test coupons were prepared by first mixing a high density polyethylene powder having a density of approximately 0.944 g/cm³ with the appropriate additive(s) in a Brabender mixing head at 200°C/50 rpm for 15 minutes. The resultant pancake was then used to produce test coupons having a thickness of 10 mils by compression molding. For aging experiments, an appropriate test coupon was placed into ajar filled with either deionized water or a chlorinated water solution prepared in accordance with the procedure of Example 1, below. The jar was then placed into a circulating hot air oven whose temperature was set to 60°C.

### EXAMPLE 1

### Preparation of a Chlorinated Water Test Solution

Four mL of commercially available Clorox bleach having an active sodium hypochlorite concentration of 5.25% was added to a 2 L volumetric flask. The flask was then filled with deionized water to the calibration mark. The resultant solution contained approximately 100 ppm of active sodium hypochlorite.

### EXAMPLE 2

### Stabilizing Effect of a Blend

### Comprising and Aromatic Amine and a Hindered Phenol in HDPE

| | | OIT (Minutes) @ 200°C | | |
|---|---|---|---|---|
| Test Coupon Formulation | Code | Unaged | After One Week Aging at 60°C | |
| | | | Deionized Water | Chlorinated Water |
| HDPE + 0.125% PHOS-1 + 0.125% PAO-1 | Control 1 | 105 | 106 | 3 |
| HDPE + 0.125% AM-1 + 0.125% PAO-1 | A | 132 | 114 | 25 |

| | | | | |
|---|---|---|---|---|
| PHOS-1 is tris(2,4-di-*tert*-butylphenyl)phosphite. PAO-1 is tetrakis [methylene (3,5-di-t-butyl-4-hydroxyhydrocinnamate)]methane. AM-1 is 4,4'-bis(α,α-dimethylbenzyl) diphenylamine. | | | | |

The results from this testing show that Code A, which was made up from a stabilizing blend of a secondary aromatic amine and sterically hindered phenol, gave superior performance compared to a phosphite-based formulation (Control 1). That performance advantage was observed for both hot water (no chlorine) and hot chlorinated water.

### EXAMPLE 3

### Stabilizing Effect of a Blend Comprising and Aromatic Amine and a Hindered Phenol in HDPE in the Presence of Carbon Black.

| | | OIT (Minutes) @ 200°C | | |
|---|---|---|---|---|
| Test Coupon Formulation | Code | Unaged | After One Week Aging at 60°C | |
| | | | Deionized Water | Chlorinated Water |
| HDPE + 0.125% PHOS-1 + 0.125% PAO-1 + 2.25% Carbon Black | Control 2 | 73 | 61 | 5 |
| HDPE + 0.125% AM-1 + 0.125% PAO-1 + 2.25% Carbon Black | B | 99 | 98 | 21 |

For carbon black-containing formulations the results from this testing show that code B, which was made up from a stabilizing blend of a secondary aromatic amine and sterically hindered phenol, gave superior performance compared to a phosphite based formulation, Control 2. The performance advantage was noted for both hot water and chlorinated hot water. In view of the many changes and modifications that can be made without departing from principles underlying the invention, reference should be made to the appended claims for an understanding of the scope of the protection to be afforded the invention.

## Claims

1. A method for increasing the stability of a high density polyethylene resin in the presence of water comprising adding to said resin a stabilizing amount of a blend of:
(A) 4,4'-bis(α,α-dimethylbenzyl)diphenylamine; and
(B) at least one sterically hindered phenol antioxidant, selected from the group consisting of 2,4-dimethyl-6-octyl-phenol; 2,6-di-t-butyl-4-methyl phenol; 2,6-di-t-butyl-4-ethyl phenol; 2,6-di-t-butyl-4-n-butyl phenol; 2,2'-methylenebis(4-methyl-6-t-butyl phenol); 2,2'-methylenebis(4-ethyl-6-t-butyl-phenol); 2,4-dimethyl-6-t-butyl phenol; 4-hydroxymethyl-2,6-di-t-butyl phenol; n-octadecyl-beta(3,5-di-t-butyl-4-hydroxyphenyl)propionate; 2,6-dioctadecyl-4-methyl phenol; 2,4,6-trimethyl phenol; 2,4,6-triisopropyl phenol; 2,4,6-tri-t-butyl phenol; 2-t-butyl-4,6-dimethyl phenol; 2,6-methyl-4-didodecyl phenol; tris(3,5-di-t-butyl-4-hydroxy isocyanurate; tris(2-methyl-4-hydroxy-5-t-butylphenyl)butane; 3,5-di-t-butyl-4-hydroxy hydrocinnamate; octadecyl-3,5-di-t-butyl-4-hydroxy hydrocinnamate; tetrakis{methylene(3,5-di-t-butyl-4-hydroxyhydrocinnamate)}methane; 1,2-bis(3,5-di-t-butyl-4-hydroxyhydrocinnamoyl)hydrazine; 1,3,5-tris(3,5-di-t-butyl-4-hydroxybenzyl)-s-triazine-2,4,6-(1H,3H,5H)trione; 2,2'-oxamido bis-{ethyl-3-(3,5-di-t-butyl-4-hydroxyphenyl)}propionate; 1,3,5-tris(4-t-butyl-hydroxy-2,6-dimethylbenzyl)-s-triazine-2,4,6-(1H,3H,5H)trione; 1,3,5-trimethyl-2,4,6-tris(3,5-di-t-butyl-4-hydroxybenzyl)benzene; 3,5-di-t-butyl-4-hydroxyhydrocinnamic acid trimester with 1,3,5-tris(2-hydroxyethyl)-5-triazine-2,4,6-(1H,3H,5H)-trione; bis(3,3-bis(4-hydroxy 3-t-butylphenyl)butanoic acid)glycolester: tetrakis{methylene (3,5-di-t-butyl-4-hydroxy-hydrocinnamate)}methane and 1,3,5-trimethyl-2,4,6-tris(3,5-di-t-butyl-4-hydroxybenzyl)benzene.

2. The method of claim 1 wherein the water is chlorinated.

## Patentansprüche

1. Verfahren zur Erhöhung der Stabilität eines hochdichten Polyethylenharzes in Gegenwart von Wasser durch Zugabe einer stabilisierenden Menge einer Mischung, die die folgenden Bestandteile umfasst, zu dem Harz:
(A) 4,4'-Bis(α,α-dimethylbenzyl)diphenylamin und
(B) mindestens ein sterisch gehindertes Phenolantioxidationsmittel, das aus der Gruppe ausgewählt ist, die aus 2,4-Dimethyl-6-octylphenyl; 2,6-Di-tert-butyl-4-methylphenol; 2,6-Di-tert-butyl-4-ethylphenol; 2,6-Di-tert-butyl-4-n-butylphenol; 2,2'-Methylenbis(4-methyl-6-tert-butylphenol); 2,2'-Methylenbis(4-ethyl-6-tert-butylphenol); 2,4-Dimethyl-6-tert-butylphenol; 4-Hydroxymethyl-2,6-di-tert-butylphenol; n-Octadecyl-beta(3,5-di-tert-butyl-4-hydroxyphenyl)propionat; 2,6-Dioctadecyl-4-methylphenol; 2,4,6-Trimethylphenol; 2,4,6-Triisopropylphenol; 2,4,6-Tri-tert-butylphenol; 2-tert-Butyl-4,6-dimethylphenol; 2,6-Methyl-4-didodecylphenol; Tris(3,5-di-tert-butyl-4-hydroxy-isocyanurat; Tris(2-methyl-4-hydroxy-5-tert-butylphenyl)butan; 3,5-Di-tert-butyl-4-hydroxyhydrocinnamat; Octadecyl-3,5-di-tert-butyl-4-hydroxyhydrocinnamat; Tetrakis{methylen(3,5-di-tert-butyl-4-hydroxy-hydrocinnamat)}methan; 1,2-Bis(3,5-di-tert-butyl-4-hydroxyhydrocinnamoyl)hydrazin; 1,3,5-Tris(3,5-di-tert-butyl-4-hydroxybenzyl)-s-triazin-2,4,6-(1H,3H,5H)trion; 2,2'-Oxamido-bis{ethyl-3-(3,5-di-tert-butyl-4-hydroxyphenyl)}propionat; 1,3,5-Tris(4-tert-butyl-3-hydroxy-2,6-dimethylbenzyl)-s-triazin-2,4,6-(1H,3H,5H)-trion; 1,3,5-Trimethyl-2,4,6-tris(3,5-di-tert-butyl-4-hydroxybenzyl)benzol; 3,5-Di-tert-butyl-4-hydroxyhydrozimtsäure-triester mit 1,3,5-Tris(2-hydroxyethyl)-5-triazin-2,4,6-(1H,3H,5H)-trion; Bis(3,3-bis(4-hydroxy-3-tert-butylphenyl)butansäure)glykolester; Tetrakis{methylen(3,5-di-tert-butyl-4-hydroxyhydrocinnamat)}methan und 1,3,5-Trimethyl-2,4,6-tris(3,5-di-tert-butyl-4-hydroxybenzyl)benzol besteht.

2. Verfahren nach Anspruch 1, wobei das Wasser chloriert ist.

## Revendications

1. Procédé pour accroître la stabilité d'une résine de polyéthylène haute densité en présence d'eau comprenant l'addition à ladite résine d'une quantité stabilisante d'un mélange :
(A) de 4,4'-bis(α,α-diméthylbenzyl)diphénylamine ; et
(B) d'au moins un antioxydant phénolique stériquement encombré, choisi dans le groupe constitué par le 2,4-diméthyl-6-octylphénol ; le 2,6-di-t-butyl-4-méthylphénol ; le 2,6-di-t-butyl-4-éthylphénol ; le 2,6-di-t-butyl-4-n-butylphénol ; le 2,2'-méthylènebis(4-méthyl-6-t-butylphénol) ; le 2,2'-méthylènebis(4-éthyl-6-t-butylphénol) ; le 2,4-diméthyl-6-t-butylphénol ; le 4-hydroxyméthyl-2,6-di-t-butylphénol ; le n-octadécyl-bêta(3,5-di-t-butyl-4-hydroxyphényl)propionate ; le 2,6-dioctadécyl-4-méthylphénol ; le 2,4,6-triméthylphénol ; le 2,4,6-triisopropylphénol ; le 2,4,6-tri-t-butylphénol ; le 2-t-butyl-4,6-diméthylphénol ; le 2,6-méthyl-4-didodécylphénol ; le tris(3,5-di-t-butyl-4-hydroxy)isocyanurate ; le tris(2-méthyl-4-hydroxy-5-t-butylphényl)butane ; le 3,5-di-t-butyl-4-hydroxy-hydrocinnamate ; l'octadécyl-3,5-di-t-butyl-4-hydroxy-hydrocinnamate ; le tétrakis-{méthylène(3,5-di-t-butyl-4-hydroxy-hydrocinnamate)}méthane ; la 1,2-bis(3,5-di-t-butyl-4-hydroxy-hydrocinnamoyl)hydrazine ; la 1,3,5-tris(3,5-di-t-butyl-4-hydroxybenzyl)-s-triazine-2,4,6-(1H,3H,5H)trione ; le 2,2'-oxamido-bis-{éthyl-3-(3,5-di-t-butyl-4-hydroxyphényl)}propionate ; la 1,3,5-tris(4-t-butyl-3-hydroxy-2,6-diméthylbenzyl)-s-triazine-2,4,6-(1H,3H,5H)trione ; le 1,3,5-triméthyl-2,4,6-tris(3,5-di-t-butyl-4-hydroxybenzyl)benzène ; le triester de l'acide 3,5-di-t-butyl-4-hydroxy-hydrocinnamique avec la 1,3,5-tris(2-hydroxyéthyl)-5-triazine-2,4,6-(1H,3H,5H)trione ; le glycolester de bis(acide 3,3-bis(4-hydroxy-3-t-butylphényl)butanoïque) ; le tétrakis{méthylène-(3,5-di-t-butyl-4-hydroxy-hydrocinnamate)}méthane et le 1,3,5-triméthyl-2,4,6-tris(3,5-di-t-butyl-4-hydroxybenzyl)benzène.

2. Procédé selon la revendication 1, dans lequel l'eau est chlorée.
